# EUROPEAN PATENT APPLICATION

(11) **EP 1 902 860 A1**
(43) Date of publication of application: **26.03.2008**
(21) Application number: 07018748.9
(22) Date of filing: 24.09.2007
(51) Int. Cl.: B60B 27/00, F16C 19/18, F16C 19/38, F16C 33/78, F16C 33/80, F16J 15/32, F16J 15/447

(54) **Wheel bearing**

(30) Priority: 25.09.2006 JP 2006259692
(71) Applicant: JTEKT Corporation, Osaka-shi Osaka 542-8502 (JP)
(72) Inventor: Takimoto, Masao, Osaka-shi Osaka 542-8502 (JP); Yu, Changxin, Osaka-shi Osaka 542-8502 (JP)
(74) Representative: Hager, Thomas Johannes

(57) **Abstract**

In a wheel bearing of the invention, a labyrinth clearance (10) is formed between a flange (21) for the mounting of a wheel thereon and an end face of an outer ring member (1). A peripheral groove (12) is formed in an inner peripheral surface of that end portion of the outer ring member (1) disposed close to the flange (21). A sealing device (6) mounted at that end portion of an annular space (4) disposed close to the flange (12) is composed of a single seal ring having a seal member formed integrally on a metal core member (61). A press-fitting portion (62a) is formed at an outer peripheral portion of the seal member, and is press-fitted in the peripheral groove (12) to be fixed thereto. An inner peripheral lip (62b) is formed at an inner peripheral portion of the seal member, and is held in sliding contact with a curved surface portion (24) interconnecting an inner peripheral surface of the inner ring member and a side face of the flange. With this construction, the clearance (10) between the flange (21) and the end face of the outer ring member (1) can be reduced to serve as the labyrinth clearance (10), and besides the axial dimension of the sealing device can be reduced.

## Description

### BACKGROUND OF THE INVENTION

### 1. Field of the Invention

This invention relates to a wheel bearing in which sealing devices are provided respectively at opposite end portions of an annular space formed between an outer ring member and an inner ring member, and more particularly to a structure around a sealing device disposed close to a side face of a wheel-mounting flange of an inner ring member which is opposed to an end face of an outer ring member fixed to a vehicle body.

### 2. Related Art

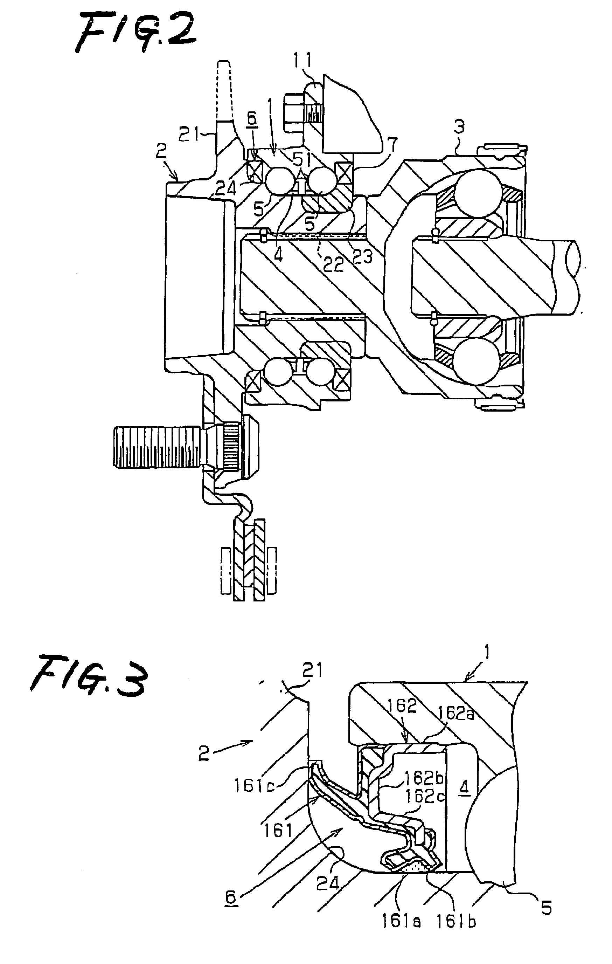

Most of wheel bearings for supporting a wheel of an automobile are of such a type as disclosed in JP-A-2002-39195 Publication, and have a double row bearing structure as shown in Fig. 2. Namely, as shown in Fig. 2, most of wheel bearings for a drive shaft comprises an outer ring member 1 for being fixed to a vehicle body (not shown), and an inner ring member 2 having a flange 21 for the mounting of a wheel (not shown) thereon. A Birfield constant velocity joint 3 is connected by spline fitting to a shaft hole 22 in the inner ring member 2. Therefore, the outer ring member 1 is disposed in a fixed condition, while the inner ring member 2 can rotate together with the drive shaft (not shown) and the wheel (not shown).

An annular space 4 is formed between the outer ring member 1 and the inner ring member 2, and two rows of rolling elements 5 held by respective cages 51 are disposed in this annular space 4. Sealing devices 6 and 7 sealing the annular space 4 are provided respectively at opposite end portions of the annular space 4. A flange 11 for connection to the vehicle body is formed at the outer ring member 1. The flange 21 is formed at an outboard end portion of the inner ring member 2, and an inner ring 23 forming a raceway surface for one row of rolling elements 5 is fixedly fitted in an inboard end portion of the inner ring member 2.

The flange 21 is disposed axially outwardly of an outboard end of the outer ring member 1, and projects radially outwardly of the outer periphery of the end portion of the outer ring member 1. Therefore, an outboard end face of the outer ring member 1 is disposed in opposed relation to a side face of the flange 21. The side face of the flange 21 and an outer peripheral surface of the inner ring member 2 (which cooperates with an inner peripheral surface of the outer ring member 1 to form the annular space 4 therebetween) are interconnected by a curved surface portion 24 of a generally arc-shaped cross-section.

In the wheel bearing of this construction, the outboard sealing device 6 comprises a single seal ring having a seal member 161 formed integrally on an annular metal core member 162 as shown in Fig. 3, the seal member 161 having two radial seal lips 161a and 161b and one axial seal lip 161c is. The metal core member 162 has a cylindrical portion 162a formed at its outer peripheral edge and having a predetermined axial length, and this cylindrical portion 162a is press-fitted into the inner peripheral surface of the outer ring member 1 to be fixed thereto. This cylindrical portion 162a has a flange portion 162b formed at its outboard end and extending radially inwardly (toward the inner ring member 2). An inner peripheral edge portion 162c of the flange portion 162b is bent to extend into an inner portion of the annular space 4, and a distal edge portion of this inner peripheral edge portion 162c further extends radially inwardly. The two radial seal lips 161a and 161b of the seal member 161 extend from the vicinity of the distal edge (inner edge) of the inner peripheral edge portion 162c, and are held in sliding contact with the outer peripheral surface of the inner ring member 2. The axial seal lip 161c of the seal member 161 extends generally radially outwardly from the vicinity of the inner peripheral portion of the flange portion 162b toward the side face of the flange 11.

In this sealing device 6, although foreign matters such as rainwater, muddy water, dirt, dust and so on intrude through a clearance between the side face of the flange 11 and the end face of the outer ring member 1, the intrusion of these foreign matters is prevented by the axial seal lip 161c and the radial seal lip 161a (provided in that portion of the annular space 4 disposed close to the flange 21) which are arranged in a two-stage manner. Leakage of grease sealed in the annular space 4 is prevented by the radial seal lip 161b disposed in that portion of the annular space 4 remote from the flange 21.

Although the inboard sealing device 7 of the above wheel bearing is not described in detail, a commonly-used conventional pack seal formed by a combination of a seal ring with seal lips and a slinger composed solely of a metal ring is used as this sealing device 7.

In the above wheel bearing, however, there is still room for improvement in compact design, that is, reduction of the axial length. Namely, the two radial seal lips 161a and 161b were so formed as to be held in sliding contact with the outer peripheral surface of the inner ring member 2 which was substantially parallel to the axial direction. Therefore, the distance between the side face of the flange 21 and the outboard end face of the outer ring member 1 was increased. And besides, the conventional wheel bearing need to have the predetermined axial length since the cylindrical portion 162a of the metal core member 162 of the sealing device 6 was press-fitted in the inner peripheral surface of the outer ring member 1 to be fixed thereto. Therefore, there was a tendency for the sealing device 6 to have the increased axial length. As a result, the distance between the outboard end face of the outer ring member 1 and the row of rolling elements 5 was increased.

### SUMMARY OF THE INVENTION

This invention has been made in view of the above problems of the conventional technique, and an object of the invention is to provide a wheel bearing in which a structure around a sealing device disposed close to a flange for the mounting of a wheel thereon is improved, thereby reducing an axial dimension.

According to the present invention, there is provided a wheel bearing comprising:
an outer ring member for mounting on a vehicle body;
an inner ring member supported by the outer ring member through rolling elements so as to rotate about an axis; the inner ring member having a flange disposed axially outwardly of an end of the outer ring member, the flange projecting radially outwardly of an outer periphery of the outer ring member such that a side face of the flange and an outer peripheral surface of the inner ring member are interconnected through a curved surface portion;
an annular space formed between the outer ring member and the inner ring member; and
sealing devices disposed at opposite ends of the annular space;
wherein a peripheral groove is formed in an inner peripheral surface of the end portion of said outer ring member disposed close to said flange;
said sealing device disposed at the end portion disposed close to said flange comprises a single seal ring having a seal member formed integrally on a metal core member, and a press-fitting portion is formed at an outer peripheral portion of said seal member, and is press-fitted in said peripheral groove to be fixed thereto, and an inner peripheral lip is formed at an inner peripheral portion of said seal member, and is held in sliding contact with said curved surface portion; and
a labyrinth clearance is formed between the side face of said flange and an end face of said outer ring member.

In the wheel bearing of the invention having the above construction, the sealing device disposed close to the flange for the mounting of the wheel thereon comprises the single seal ring having the seal member formed integrally on the metal core member, and the press-fitting portion formed at the outer peripheral portion of the seal member is press-fitted in the peripheral groove to be fixed thereto. Therefore, the sealing device does not need to have a cylindrical portion (as provided in the conventional structure) to be fixedly fitted in the inner peripheral surface of the outer ring member. Therefore, an axial length required for the mounting of the cylindrical portion is saved, so that the axial dimension of the wheel bearing can be reduced. And besides, the inner peripheral lip is held in sliding contact with the curved surface portion interconnecting the flange and the outer peripheral surface of the inner ring member, and therefore the clearance between the side face of the flange and the end face of the outer ring member can be formed as the labyrinth clearance, and also the distance from the end of the annular space to the rolling elements can be reduced. Thus, in the wheel bearing of the invention, the clearance between the side face of the flange and the end face of the outer ring member can serve as the labyrinth clearance, and in addition the axial dimension of the sealing device, as well as the distance from the end of the annular space to the rolling elements, can be reduced, so that the axial dimension of the wheel bearing can be reduced. Furthermore, in the wheel bearing of the above construction, the intrusion of external foreign matters (such as rainwater, muddy water, dirt, dust, etc.) from the exterior is prevented mainly by the labyrinth clearance formed between the side face of the flange and the end face of the outer ring member. And, those foreign matters passing through this labyrinth clearance to intrude further are blocked by the outer radial seal lip disposed in the annular space.

Furthermore, the metal core member includes a flat plate-like center portion extending radially, and an outer edge portion formed integrally at an outer peripheral edge of the center portion, and this outer edge portion is bent to extend axially toward an inner portion of the annular space, and is disposed radially inwardly of the peripheral groove in opposed relation to the peripheral groove. Preferably, the metal core member further includes an inner edge portion formed integrally at an inner peripheral edge of the center portion, and this inner edge portion is bent to extend in a direction generally the same as the direction of extending of the outer edge portion, and a distal edge portion of the inner edge portion is further bent radially inwardly at a region disposed in the vicinity of a plane in which an inward wall surface of the peripheral groove lies. With this construction, the rigidity of the press-fitting portion is increased by the outer edge portion of the metal core member, and therefore the axial length of the sealing device can be further reduced. Furthermore, the metal core member is formed such that it is bent a plurality of times in the axial direction within the annular space having a predetermined size, and therefore the rigidity of the metal core member can be increased, and besides the ability of the metal core member to adhere to the seal member so as to provide the unitary structure of the sealing device can be enhanced.

Furthermore, the invention can be applied to a double row wheel bearing. In this case, instead of reducing the axial dimension, the distance between ball centers of two rows of rolling elements can be increased. By doing so, the distance between the effective load centers (on which loads act) can be increased, thereby increasing the rigidity of the bearing.

In the present invention, the dimension between the side face of the flange and the end face of the outer ring member can be reduced, and also the axial length of the sealing device can be reduced. As a result, the axial length of the wheel bearing can be reduced. In the case where the present invention is applied to a double row wheel bearing, instead of reducing the axial dimension, the distance between ball centers of two rows of rolling elements canbe increased, thereby increasing the rigidity of the bearing.

### BRIEF DESCRIPTION OF THE DRAWINGS

Fig. 1 is a cross-sectional view of a preferred embodiment of a wheel bearing of the present invention, showing a sealing device and its neighboring portions.
Fig. 2 is a cross-sectional view of an ordinary drive shaft-side wheel bearing.
Fig. 3 is a cross-sectional view of a conventional wheel bearing, showing a sealing device and its neighboring portions.

### DETAILED DESCRIPTION OF THE PREFERRED EMBODIMENTS

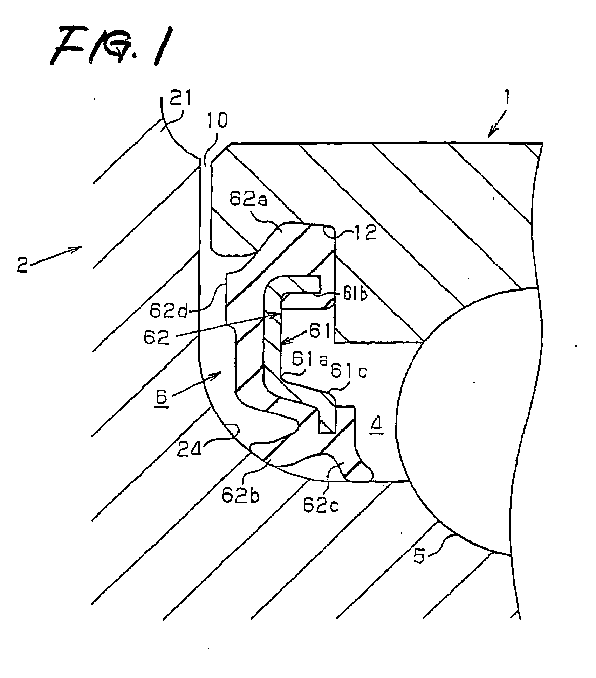

A preferred embodiment of a wheel bearing of the present invention will now be described with reference to the drawings. Fig. 1 is an enlarged view of a portion of the wheel bearing of the invention, showing a sealing device and its neighboring portions. Although the wheel bearing of this embodiment is identical in overall basic construction to the wheel bearing of Fig. 2, a structure around the sealing device disposed close to a flange 21 for the mounting of a wheel thereon is constructed as shown in Fig. 1. This structure will hereafter be mainly described, and those portions similar to the corresponding portions of Fig. 2 will be described with reference to Fig. 2.

The wheel bearing of this embodiment is identical in basic construction to the wheel bearing of Fig. 2, and comprises an outer ring member 1 for mounting on a vehicle body, and an inner ring member 2 supported by the outer ring member 1 through rolling elements 5 so as to rotate about an axis of the wheel bearing. The flange 21 is formed at the inner ring member 2, and is disposed axially outwardly of an end of the outer ring member 1, and projects radially outwardly of an outer periphery of the outer ring member 1. A side face of the flange 21 and an outer peripheral surface of the inner ring member 2 are interconnected by a curved surface portion 24 of a generally arc-shaped cross-section. An annular space 4 is formed between the outer ring member 1 and the inner ring member 2, and sealing devices 6 and 7 are disposed respectively at opposite ends of this annular space 4.

In this construction, a peripheral groove 12 is formed in an inner peripheral surface of that end portion of the outer ring member 1 disposed close to the flange 21 as shown in Fig. 1. The sealing device 21 disposed at the end portion disposed close to the flange 21 comprises a single seal ring having a seal member 62 formed integrally on a metal core member 61. The metal core member 61 is formed by subjecting a metal plate (such for example as a stainless steel) with excellent corrosion resistance to blanking (pressing), bending and cutting. This metal core member 61 includes a center portion 61a, an outer edge portion 61b formed integrally at an outer peripheral edge of the center portion 61a, and an inner edge portion 61c formed integrally at an inner peripheral edge of the center portion 61a. The center portion 61a has a flat plate-shape, and extends radially. The outer edge portion 61b is bent to extend axially toward an inner portion of the annular space 4, and is disposed radially inwardly of the peripheral groove 12 in opposed relation to the peripheral groove 12. An axial length of the thus bent outer edge portion 61b is generally equal to a width of the peripheral groove 12. The inner edge portion 61b is bent from the inner peripheral edge of the center portion 61a in a direction generally the same as the direction of extending of the outer edge portion 61b, and its distal edge portion is further bent radially inwardly at a region disposed in the vicinity of a plane in which an axially-inward wall surface of the peripheral groove 12 lies.

The seal member 62 is made of an elastic material such as nitrile rubber, acrylic rubber, silicone rubber, etc., and is formed integrally on the metal core member 61 by baking or other means. A press-fitting portion 62a for press-fitting into the peripheral groove 12 of the outer ring member 1 is formed at an outer peripheral portion of the seal member 62. An inner peripheral portion of the seal member 62 is bifurcated to provide two inner peripheral lips 62b and 62c spaced from each other in the axial direction and extending from that portion of the seal member 62 in which the inner peripheral edge of the inner edge portion 61c of the metal core member 61 is embedded. The inner peripheral lip 62b disposed close to the flange 21 is so formed as to be held in sliding contact with the curved surface portion 24, and the inner peripheral lip 62c disposed remote from the flange 21 (that is, disposed in the inner portion of the annular space 4) is so formed as to be held in sliding contact with the outer peripheral surface of the inner ring member 2. A distal edge of the inner peripheral lip 62b close to the flange 21 is pressed against the surface of the curved surface portion 24, and is directed toward the flange 21. A distal edge of the inner peripheral lip 62c remote from the flange 21 is pressed against the outer peripheral surface of the inner ring member 2, and is directed toward the inner portion of the annular space 4. A projecting portion 62d is formed on that side face of the seal member 62 disposed close to the flange 21. When the sealing devices 6 are stored in a stacked condition, this projecting portion 62d serves to prevent the adjacent seal members 62 from coming into intimate contact with each other over a wide area, thereby preventing a situation in which the adjacent sealing devices 6 can not be easily separated from each other.

The end portion of the outer ring member 1 and the sealing device 6 are formed as described above, and with this construction the clearance between the side face of the flange 21 and the end face of the outer ring member 1 is reduced to serve as the labyrinth clearance 10.

In the wheel bearing of this embodiment having the above construction, the following advantageous effects can be achieved.

The sealing device 6 of this embodiment comprises the single seal ring having the seal member 62 formed integrally on the metal core member 61, and the press-fitting portion 62a formed at the outer peripheral portion of the seal member 62 is press-fitted into the peripheral groove 12 to be fixed thereto. Therefore, the sealing device 6 does not need to have a cylindrical portion (as provided in the conventional structure) to be fixedly fitted in the inner peripheral surface of the outer ring member 1. Therefore, an axial length required for the mounting of the cylindrical portion can be saved, so that the axial dimension of the wheel bearing can be reduced.

And besides, the inner peripheral lips 62b and 62c are held in sliding contact with the curved surface portion 24 interconnecting the flange 21 and the outer peripheral surface of the inner ring member 2, and therefore the clearance between the side face of the flange 21 and the end face of the outer ring member 1 can be formed as the labyrinth clearance 10, and also the distance from the end of the annular space 4 to the rolling elements 5 can be reduced.

with this construction in which the labyrinth clearance 10 is formed between the side face of the flange 21 and the end face of the outer ring member 1, and the distance from the end of the annular space 4 to the rolling elements 5 can be reduced, the axial dimension of the wheel bearing can be reduced.

Furthermore, in the wheel bearing of the above construction, since the labyrinth clearance 10 is formed between the side face of the flange 21 and the end face of the outer ring member 1, external foreign matters such as rainwater, muddy water, dirt, dust, etc., are first prevented by this labyrinth clearance 10 from intrusion. And, those foreign matters passing through this labyrinth clearance 10 to intrude into an inner portion are blocked by the inner peripheral lip 62b close to the flange 21. Leakage of grease sealed in the annular space 4 is prevented by the inner peripheral lip 62c remote from the flange 21.

The metal core member 61 is formed into such a shape that it is bent a plurality of times in the axial direction within the annular space 4, and therefore the rigidity of the metal core member 61 can be increased while reducing its axial dimension. And besides, with this construction, the area of contact between the metal core member 61 and the seal member 62 can be increased, and therefore the ability of the metal core member 61 to adhere to the seal member 62 so as to provide the unitary structure of the sealing device 6 is enhanced.

In the case where the wheel bearing is a double row bearing as in this embodiment, instead of reducing the axial dimension, the distance between ball centers of two rows of rolling elements 5 can be increased, and by doing so, the distance between the effective load centers (on which loads act) is increased, thereby increasing the rigidity of the bearing.

The wheel bearing of the above embodiment can be modified as follows.
(1) Although a side lip for sliding contact with the side face of the flange 21 is not formed at the seal member 62, such a side lip may be added so as to enhance the sealing performance.
(2) In the above embodiment, the inner ring member 2 has one inner ring 23 mounted thereon, but is not limited to this construction and can be formed into the type employing two inner rings respectively bearing two rows of rolling elements 5.

Although the above embodiment is directed to the double row thrust bearing, the type of bearing in which the sealing device 6 of the invention is used is not limited to such thrust bearing. For example, the sealing device 6 can be used in any other suitable rolling bearing such as a radial roller bearing, a thrust roller bearing, etc.

## Claims

1. A wheel bearing comprising:
an outer ring member for mounting on a vehicle body;
an inner ring member supported by the outer ring member through rolling elements so as to rotate about an axis; the inner ring member having a flange disposed axially outwardly of an end of the outer ring member, the flange projecting radially outwardly of an outer periphery of the outer ring member such that a side face of the flange and an outer peripheral surface of the inner ring member are interconnected through a curved surface portion;
an annular space formed between the outer ring member and the inner ring member; and
sealing devices disposed at opposite ends of the annular space;
wherein a peripheral groove is formed in an inner peripheral surface of the end portion of said outer ring member disposed close to said flange;
said sealing device disposed at the end portion disposed close to said flange comprises a single seal ring having a seal member formed integrally on a metal core member, and a press-fitting portion is formed at an outer peripheral portion of said seal member, and is press-fitted in said peripheral groove to be fixed thereto, and an inner peripheral lip is formed at an inner peripheral portion of said seal member, and is held in sliding contact with said curved surface portion; and
a labyrinth clearance is formed between the side face of said flange and an end face of said outer ring member.

2. A wheel bearing according to claim 1, wherein said metal core member includes a flat plate-like center portion extending radially, an outer edge portion formed integrally at an outer peripheral edge of said center portion, and an inner edge portion formed integrally at an inner peripheral edge of said center portion, and said outer edge portion is bent to extend axially toward an inner portion of said annular space, and is disposed radially inwardly of said peripheral groove in opposed relation to said peripheral groove, and said inner edge portion is bent to extend in a direction generally the same as the direction of extending of said outer edge portion, and a distal edge portion of said inner edge portion is further bent radially inwardly at a region disposed in the vicinity of a plane in which an inward wall surface of said peripheral groove lies.

3. A wheel bearing according to claim 1, wherein plural rows of said rolling elements are arranged.
